# EUROPEAN PATENT APPLICATION

(11) **EP 4 714 311 A1**
(43) Date of publication of application: **25.03.2026**
(21) Application number: 23945962.1
(22) Date of filing: 18.07.2023
(51) Int. Cl.: A47J 31/36, A47J 31/44, A47J 31/46, A47J 31/54

(54) **BEVERAGE DEVICE**

(71) Applicant: LG Electronics Inc., Yeongdeungpo-gu Seoul 07336 (KR)
(72) Inventor: LEE, Jungsuk, Seoul 08592 (KR); LEE, Joon Bum, Seoul 08592 (KR); CHA, Jungmin, Seoul 08592 (KR); LEE, Yeontaek, Seoul 08592 (KR)
(74) Representative: Ter Meer Steinmeister & Partner
(86) International application number: PCT/KR2023/010329
(87) International publication number: WO 2025/018452

(57) **Abstract**

A beverage machine using capsules of the present disclosure may be formed so that a seating direction of the capsule and a direction in which the beverage is extracted may be formed to coincide with the direction of gravity, and a direction of pressurizing and perforating the capsule is toward the direction of gravity, thereby improving extraction efficiency.

## Description

### Technical Field

The present disclosure relates to a beverage machine for extracting beverages contained in capsules.

### Background Art

Capsules, which contain sealed package inside the raw materials for manufacturing beverages, are widely used. These capsules store the raw materials of the beverage in a sealed state inside, and the user may make the beverage by passing water through the capsule using a machine. A representative example of a beverage machine that uses capsules is a coffee machine. Recently, in addition to coffee, various beverages and beverage ingredients are provided in capsules for use in making beverages.

One of the machines for extracting beverages using capsules in this way is disclosed in Korean Patent Publication No. 10-2015-0017541 (Prior Art 1). In Prior art 1, the entire machine is integrated and all components are contained within one housing, so there is a problem in that the operation of the extracting part may not be varied. In addition, since the beverage is extracted using only one capsule, it is difficult to extract various beverages, and the part where the extracted beverage is discharged is fixed, so various types of cups may not be used.

In Korean Patent Publication No. 10-2017-0040026 (Prior Art 2), the structure for forming a hole in the capsule and injecting water is relatively complicated because it is designed to perform a rotational movement. In addition, a user must perform a separate operation to make a hole in the capsule, and it is inconvenient to insert and remove the capsule. In addition, since the prior art 2 has a structure in which the perforating member punctures a hole in the capsule and then supplies high-pressure hot water, there is an inconvenience in that the capsule does not separate smoothly due to the pressure of the extraction space after the extraction of the beverage is completed.

In Korean Patent Publication No. 10-2006-0039431 (Prior Art 3), the capsule is placed horizontally. In this structure, the direction in which the capsule is pressed to inject water into the capsule for extraction and the direction in which the beverage extracted from the capsule is discharged are not the same and are perpendicular to each other, which reduces the extraction efficiency. Nevertheless, the reason why the capsule is placed horizontally is because if the capsule is placed vertically, the capsule is not easily separated during the return operation of the pressurizing structure pressing the capsule.

In addition, in the prior art including the above-mentioned prior arts, when the extraction of the beverage is completed, the remaining beverage may flow out from the capsule. Accordingly, there is a problem in that when a user took out the beverage cup, the beverage flowing from the capsule flowed to the floor.

Of course, by adding a valve to the discharge flow path (or discharge pipe) through which the beverage is discharged, the problem of remaining beverage flowing to the floor may be prevented. However, when a valve is added to the discharge flow path, the beverage remains in the corresponding discharge flow path, causing a problem of flowing to the beverage cup when extracting the next beverage.

### DETAILED DESCRIPTION OF THE DISCLOSURE

### Technical Problem

The present disclosure has been devised to solve various problems of the prior art described above. The purpose of the present disclosure is to improve extraction efficiency by arranging a capsule's seating direction and an extraction direction of the extracted beverage to coincide vertically.

The purpose of the present disclosure is to ensure that a plurality of capsules are accurately seated in a correct position.

The purpose of the present disclosure is to allow the seating portion of the capsule to be selectively opened and closed.

The purpose of the present disclosure is to enable the capsule to be separated from a cap member during the upward movement of the cap member after extracting the beverage.

The purpose of the present disclosure is to enable cleaning by selectively separating the capsule seating area.

The purpose of the present disclosure is to prevent a safety risk of safety accidents by allowing the extraction operation to be performed when the capsule is seated in the correct position.

The purpose of the present disclosure is to ensure that infusion water flowing inside the cap member is supplied to the capsule by avoiding the part for perforating the capsule or the part for separating the capsule.

The purpose of the present disclosure is to prevent the beverage remaining in a flow path after extraction of the beverage from falling onto the upper surface of a base.

### Problem Solving

According to a beverage machine of the present disclosure for achieving the above purpose, a cap member constituting an extracting part may be configured to press a capsule from top to bottom.

According to the beverage machine of the present disclosure, infusion water may be directed into an upper portion of the cap member, injected into the capsule through a hole made in the top of the capsule, and then be discharged through the bottom of the capsule.

According to the beverage machine of the present disclosure, a seating direction of the capsule and a direction in which the beverage is extracted may be formed to coincide with the direction of gravity.

According to the beverage machine of the present disclosure, a receiving groove of the same shape as the capsule is formed in the cap member, so that the cap member may receive the capsule by the downward movement and gradually pressurize the capsule.

According to the beverage machine of the present disclosure, the cap member is provided with a perforating protrusion so that the capsule may be perforated.

According to the beverage machine of the present disclosure, a housing that covers a space where the capsule beverage is extracted may be provided.

According to the beverage machine of the present disclosure, the housing may form the exterior of the beverage machine.

According to the beverage machine of the present disclosure, a frame member may be fixed within the housing.

According to the beverage machine of the present disclosure, the frame member may be formed to provide a space in which the capsule is seated.

According to the beverage machine of the present disclosure, the frame member may be formed to discharge an extracted beverage to a lower portion of the space where the capsule is seated.

According to the beverage machine of the present disclosure, a receiving groove may be formed in the cap member to receive the capsule. As a result, as the cap member is moved downward, the capsule is pressurized while being accommodated in the receiving groove, thereby preventing the capsule from moving.

According to the beverage machine of the present disclosure, the cap member may be formed to allow the infusion water to flow around the upper portion of the cap member.

According to the beverage machine of the present disclosure, a flow path through which the infusion water flows may be formed inside the cap member.

According to the beverage machine of the present disclosure, the flow path formed in the cap member is provided on the upper portion of the receiving groove.

According to the beverage machine of the present disclosure, a space may be formed between the upper surface of the receiving groove formed in the cap member and the upper surface of the capsule through which the infusion water may flow.

According to the beverage machine of the present disclosure, the flow path formed in the cap member may include a flow path formed horizontally and a flow path formed vertically.

According to the beverage machine of the present disclosure, the flow path formed in the cap member may include a flow path through which the infusion water flows from a nozzle and a flow path through which the infusion water is discharged into the receiving groove.

According to the beverage machine of the present disclosure, the flow path for discharging the infusion water into the receiving groove may be formed to communicate with the upper circumferential space within the receiving groove.

According to the beverage machine of the present disclosure, the flow path through which the infusion water flows into the receiving groove may be configured to prevent backflow of the infusion water.

According to the beverage machine of the present disclosure, a separating pin may be provided to prevent the capsule from being pulled in when the cap member is moved back.

According to the beverage machine of the present disclosure, the separating pin is provided in the center of the upper surface of the receiving groove formed in the cap member.

According to the beverage machine of the present disclosure, the separating pin is configured to push the upper surface of the capsule when the cap member moves upward.

According to the beverage machine of the present disclosure, the separating pin may be installed to operate elastically.

According to the beverage machine of the present disclosure, the housing may be divided into a plurality of parts.

According to the beverage machine of the present disclosure, the housing may include a lower housing with an outlet formed on the bottom thereof.

According to the beverage machine of the present disclosure, the capsule may be positioned within the frame member while a tray on which the capsule is seated is inserted into an open portion formed on the circumferential surface of the housing.

According to the beverage machine of the present disclosure, the open portion formed in the housing may be opened and closed by a cover.

According to the beverage machine of the present disclosure, the cover may be configured to lift and lower automatically.

According to the beverage machine of the present disclosure, the cover may be configured to lift and lower using a structure of a rack gear and a pinion gear.

According to the beverage machine of the present disclosure, the cover may be lifted and lowered together with a guide member that lifts and lowers guided by a lifting guide.

According to the beverage machine of the present disclosure, a switch may be provided to prevent excessive lowering of the cover.

According to the beverage machine of the present disclosure, the tray on which the capsule is placed may be configured to be separated from the housing.

According to the beverage machine of the present disclosure, the tray may be provided with a stand on which the capsule is placed.

According to the beverage machine of the present disclosure, the stand may be installed to be detachable from a seating portion for cleaning.

According to the beverage machine of the present disclosure, the housing may be provided with a beverage reservoir that receives the beverage extracted from the capsule and drops into a beverage cup.

According to the beverage machine of the present disclosure, the housing may be provided with a residual reservoir to prevent the beverage flowing down to the beverage reservoir from falling to a base.

According to the beverage machine of the present disclosure, the residual reservoir may be formed to store a certain amount of beverage.

According to the beverage machine of the present disclosure, an outlet port may be formed on the residual reservoir to allow the beverage falling from a guide pipe to pass through.

According to the beverage machine of the present disclosure, the outlet port is formed to protrude from a lower portion of the residual reservoir, so that the remaining beverage stored in the residual reservoir may be prevented from flowing down into the outlet port.

According to the beverage machine of the present disclosure, the outlet port may be configured to be selectively opened and closed.

According to the beverage machine of the present disclosure, the residual reservoir may be configured to be easily attached and detached from the housing.

### Effects of the Disclosure

The beverage machine according to the present disclosure may have at least one of the following effects.

In the beverage machine of the present disclosure, a seating direction of a capsule and a direction in which the beverage is extracted is formed to coincide with the direction of gravity, thereby improving extraction efficiency.

In the beverage machine of the present disclosure, a receiving groove of the same shape as the capsule is formed in the cap member to receive the capsule so that the capsule may be prevented from moving during the extraction of the beverage.

In the beverage machine of the present disclosure, the cap member is provided with a perforating protrusion so that the cap member may simultaneously pressurize and perforate the capsule

In the beverage machine of the present disclosure, a space where the capsule beverage is extracted may be protected from an external environment by a housing forming the exterior of the machine.

In the beverage machine of the present disclosure, since a hose is connected around the upper end of the cap member to deliver infusion water, the cap member may be moved up and down while providing the infusion water into the cap member.

In the beverage machine of the present disclosure, a flow path formed inside the cap member is positioned on the upper portion of the receiving groove to provide infusion water from the top of the receiving groove toward the inside of the receiving groove.

In the beverage machine of the present disclosure, a space through which the infusion water may flow is formed between the upper surface of the receiving groove formed in the cap member and the upper surface of the capsule. As a result, even if a through-hole formed in the capsule is not located in the exact center of the capsule, the infusion water may be supplied to the capsule smoothly.

In the beverage machine of the present disclosure, since the flow path formed in the cap member includes a flow path formed horizontally and a flow path formed vertically, the infusion water flows in in a direction horizontal to a nozzle and then toward the inside of the receiving groove.

In the beverage machine of the present disclosure, since a check valve is provided in the flow path formed in the cap member, the infusion water in the receiving groove may be prevented from flowing back.

In the beverage machine of the present disclosure, a separating pin may be provided in the cap member to prevent the capsule from being pulled in when the cap member is returned.

In the beverage machine of the present disclosure, since the separating pin is located at the center of the upper surface in the receiving groove formed in the cap member, the capsule may be accurately separated.

In the beverage machine of the present disclosure, since the separating pin is installed to operate elastically, the capsule may be pushed with strong force when the cap member moves upward.

In the beverage machine of the present disclosure, the capsule is provided by a tray, so the capsule may be provided in the correct position.

In the beverage machine of the present disclosure, a cover closes when the tray is inserted into the housing, so the tray may be prevented from unintentionally moving out of its original position.

In the beverage machine of the present disclosure, the cover may be configured to lift and lower automatically using a structure of a rack gear and a pinion gear.

In the beverage machine of the present disclosure, a stand is installed to be detachable from a tray for cleaning.

In the beverage machine of the present disclosure, since the beverage machine is provided with a beverage reservoir, beverages extracted from a plurality of capsules may accurately fall into a beverage cup provided in any one location.

The beverage machine of the present disclosure is provided with a residual reservoir to prevent the beverage flowing down to the beverage reservoir from falling to a base.

In the beverage machine of the present disclosure, a outlet port formed in the residual reservoir is selectively opened and closed to prevent the remaining beverage from unintentional falling into the outlet port.

In the beverage machine of the present disclosure, the outlet port is formed to protrude at a predetermined height, so that the remaining beverage may be stored in the residual reservoir to a predetermined height.

In the beverage machine of the present disclosure, the residual reservoir is configured to be easily detachable from the housing, so the remaining beverage stored in the residual reservoir may be discharged and cleaned at any time.

### Brief Description of the drawings

FIG. 1 is a front view of a beverage machine according to an embodiment of the present disclosure.
FIG. 2 is a front view of a cover of the beverage machine according to the embodiment of the present disclosure in a state in which the cover is moved upward.
FIG. 3 is an exploded perspective view of the beverage machine according to the embodiment of the present disclosure viewed from the rear side.
FIG. 4 is a plan view showing the internal structure of a base of the beverage machine according to the embodiment of the present disclosure.
FIG. 5 is a side cross-sectional view of the beverage machine according to the embodiment of the present disclosure.
FIG. 6 is a front cross-sectional view of the beverage machine according to the embodiment of the present disclosure.
FIG. 7 is an exploded perspective view of the rear side with a guide member of a lifting part of the beverage machine separated according to the embodiment of the present disclosure.
FIG. 8 is an exploded perspective view of the front side with the guide member of the lifting part of the beverage machine moved upward according to the embodiment of the present disclosure.
FIG. 9 is a perspective view of the main part for explaining the lifting part of the beverage machine according to the embodiment of the present disclosure.
FIG. 10 is a perspective view of the main part for explaining the relationship between the lifting part and the cover of the beverage machine according to the embodiment of the present disclosure.
FIG. 11 is an enlarged rear perspective view showing the lifted state of the guide member of the lifting part of the beverage machine according to the embodiment of the present disclosure.
FIG. 12 is a perspective view of the main part for explaining the coupling structure of the lifting guide and the guide member of the lifting part of the beverage machine according to the embodiment of the present disclosure.
FIG. 13 is a front perspective view of the beverage machine extracting part according to the embodiment of the present disclosure.
FIG. 14 is a rear perspective view of the extracting part of the beverage machine according to the embodiment of the present disclosure.
FIG. 15 is an exploded perspective view of the relationship between a lifting module and a power transmission structure of the beverage machine according to the embodiment of the present disclosure.
FIG. 16 is an exploded perspective view of the lifting module of the beverage machine according to the embodiment of the present disclosure.
FIG. 17 is a combined perspective view of the lifting module of the beverage machine according to the embodiment of the present disclosure.
FIG. 18 is a perspective view of each gear coupled to the elevating module of the beverage machine according to an embodiment of the present disclosure.
FIGS. 19 and 20 are a perspective view and an exploded view of the relationship between each gear and a motor that transmit power to the lifting module of the beverage machine according to the embodiment of the present disclosure.
FIG. 21 is a perspective view of a tray of the beverage machine according to the embodiment of the present disclosure in a separated state.
FIG. 22 is a perspective view of the tray of the beverage machine according to the embodiment of the present disclosure.
FIG. 23 is an exploded perspective view of the tray of the beverage machine according to the embodiment of the present disclosure.
FIG. 24 is a cross-sectional view of a cap member of the beverage machine according to the embodiment of the present disclosure.
FIG. 25 is a cross-sectional view of a capsule being positioned and perforated within the cap member of the beverage machine according to the embodiment of the present disclosure.
FIGS. 26 to 28 are cross-sectional views of the operating state of the beverage machine according to the embodiment of the present disclosure.
FIGS. 29 to 31 are cross- sectional views showing the operating state of the beverage machine at a different location from Figures 26 to 28 according to the embodiment of the present disclosure.
FIG. 32 is a cross-sectional view of the main part of a state in which a residual reservoir is installed in a housing of the beverage machine according to the embodiment of the present disclosure.
FIG.33 is an enlarged view of portion "A" of FIG. 5 in the beverage machine according to the embodiment of the present disclosure.
FIG. 34 is a state diagram in which a beverage reservoir and a residual reservoir are installed in the housing of the beverage machine according to the embodiment of the present disclosure.
FIGS. 35 and 36 are perspective views of the residual reservoir and its operating state of the beverage machine according to the embodiment of the present disclosure.

### Mode for Invention

Hereinafter, some embodiments of the present disclosure are described in detail with reference to exemplary drawings. In adding reference numerals to components of each drawing, it should be noted that the same components have the same numerals as much as possible even though they are displayed on different drawings. Also, in describing an embodiment of the present disclosure, when it is determined that a detailed description of a related known configuration or function interferes with the understanding of the embodiment of the present disclosure, the detailed description thereof will be omitted.

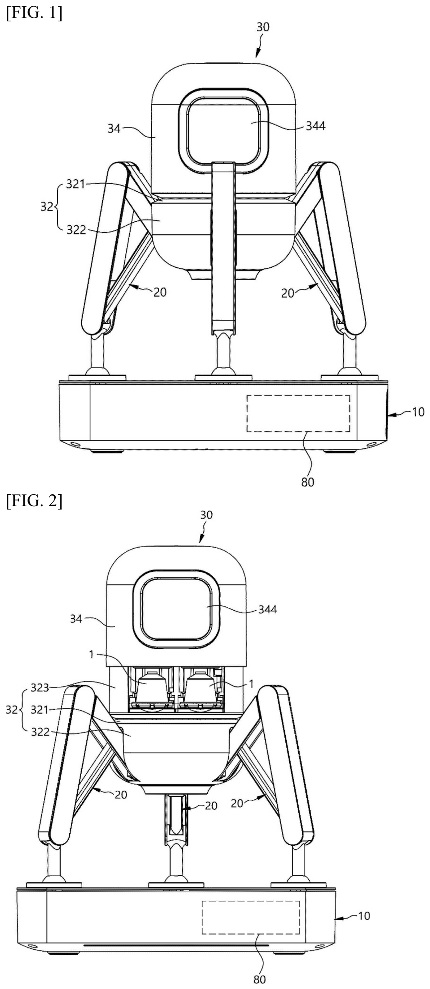

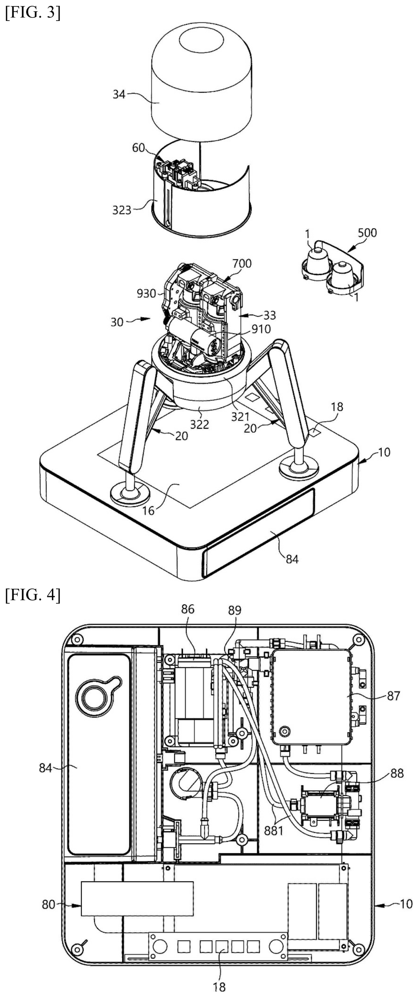

The attached FIGS. 1 and 2 are front views of a beverage machine according to an embodiment of the present disclosure, showing a cover in a closed or open state, respectively. In addition, FIG. 3 is an exploded perspective view showing the internal structure of the beverage machine of the embodiment of the present disclosure.

The beverage machine according to the embodiment of the present disclosure may be formed so that a seating direction of a capsule 1 and a direction in which the beverage is extracted may be formed to coincide with the direction of gravity. In this way, extraction efficiency may be improved.

The beverage machine of the embodiment of the present disclosure will be described with reference to the drawings.

The beverage machine of the embodiment of the present disclosure may include a base 10.

The base 10 may be provided with a water container 84. The water container 84 stores the infusion water needed to extract a capsule beverage. As shown in the FIG. 3, the water container 84 may be attached and detached from a side of the base 10.

As shown in FIG. 4, a pump 86 may be provided within the base 10. The pump 86 may perform an operation of pumping the water in the water container 84 and supplying it to a extracting part 30.

As shown in FIG. 4, a heating part 87 may be provided within the base 10. The heating part 87 is configured to heat the infusion water pumped by the pump 86 to a set temperature. The heating part 87 may be formed as a boiler that controls the temperature of the infusion water by heating a pipe through which the infusion water flows with a high-temperature fluid or heat. Although not shown, the heating part 87 may be configured as a heater installed in a pipe through which the infusion water flows.

As shown in FIG. 4, a valve may be provided within the base 10. The valve selectively blocks the flow of the infusion water pumped by the pump 87. That is, the valve may selectively supply the infusion water to the capsule 1 in an extracting part 30, which will be described later. The valve 1 may include an over pressure prevention valve (OPV: Over Pressure Valve) 89 to prevent over pressure. Additionally, the valve may include a flow control valve that controls the flow of heated infusion water as it passes through the heating part 87. For example, the flow control valve may be configured as a three-way valve to selectively supply the infusion water to the two capsules 1.

As shown in FIG. 3, a display window 16 may be provided on an outer surface of the base 10. The display window 16 may serve to provide various information related to the operation of the beverage machine or various information related to the beverage. The display window 16 may be configured to input various information for the operation of the beverage machine. For example, the display window 16 may be configured as a touch panel. An operation part 18 for receiving information from a user may be additionally provided on an upper surface of the base 10.

As shown in FIG. 4, a control part 80 may be provided within the base 10. The control part 80 may control the operation of the entire machine. The control part 80 may include a controller that controls the display window 16.

A power supply part (not shown) may be provided within the base 10. The power supply part may be configured to receive external power. Although not shown, the power supply part may be a battery.

Next, the beverage machine of the embodiment of the present disclosure may include a support leg 20.

The support leg 20 serves to support the extracting part 30, which will be described later, to be installed on the base 10. That is, the extracting part may be installed on the base 10 by the support leg 20.

The support legs 20 may be provided in plurality, and in this case, each support leg 20 may be formed to be connected respectively along the circumference of the extracting part 30.

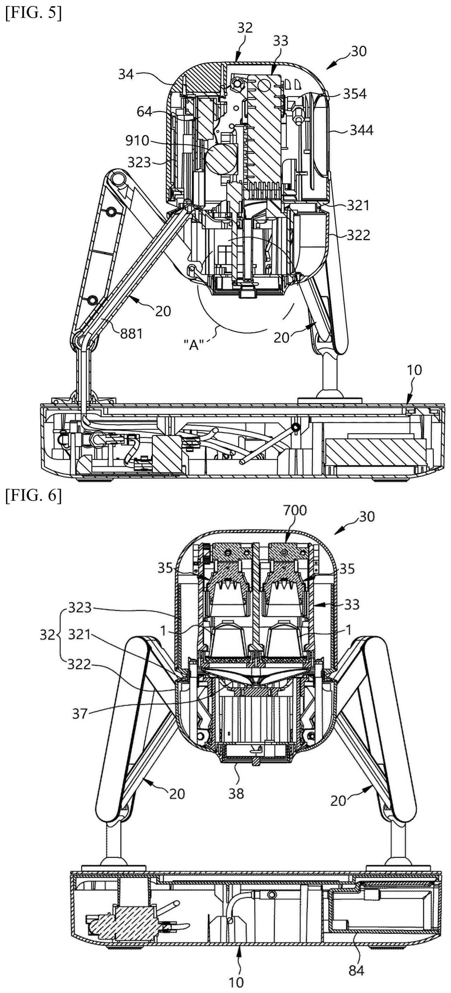

The support leg 20 may be formed as a pipe body with an empty interior. As a result, a wire (not shown) for delivering a control signal or power of the control part 80 in the base 10 through the support leg 20 may be provided to the extracting unit 30 to be described later. In addition, as shown in FIG. 5, a hose 881 may be provided to guide the flow of the infusion water to the extracting part through the support leg 20.

Preferably, one support leg 20 may be provided with an electric wire, and the other support leg 20 may be provided with a hose 881. This prevents the wire from being affected (leakage, high temperature, etc.) by the infusion water in the hose 881.

Although not shown, as an example, the wire and hose 881 may be provided on one support leg 20. As another example, the wire or hose 881 may be connected to the extracting part 30 through a structure other than the support leg 20. As another example, the wire or hose 881 may be connected to the extracting part 30 without a support leg 20 or structure.

Next, the beverage machine of the embodiment of the present disclosure may include the extracting part 30. The capsule 1 is mounted on the extracting part 30, and the beverage of the capsule 1 is extracted by receiving the infusion water stored in the water container 84.

The extracting part 30 is provided separately from the base 10 and may be installed above the base 10 by the support leg 20.

The extracting part 30 may be arranged to be spaced apart from the base 10 by a certain height. That is, a gap sufficient to place a beverage cup 2 may be secured between the extracting part 30 and the base 10.

The extracting part 30 constituting the beverage machine of the embodiment of the present disclosure may include a housing 32.

The housing 32 may be formed to partition and protect the space within the extracting part 30 from the external environment. The housing 32 may be provided as the exterior of the beverage machine of the present disclosure. The space where the capsule beverage is extracted may be blocked from the external environment by the housing 32.

As shown in FIGS. 5 to 8, the housing 32 includes a frame 321, an upper housing 323 located above and a lower housing 322 located below based the frame 321. The frame 321, the upper housing 323, and the lower housing 322 may be provided separately from each other. Although not shown, at least one of the upper housing 323 and the lower housing 322 may be provided as a single piece to the frame 321.

The frame 321 may be formed in a ring shape.

The upper housing 323 may be fixed to an upper side of the frame 321 and form the upper body of the extracting part 30. The upper housing 323 may be formed in a cylindrical shape that is open up and down, and a portion of the circumference of the upper housing 323 may be open. For example, the front circumference of the upper housing 323 may be opened to form an input opening 323a. A tray, to be described later, may be stored or taken out through the input opening 323a of the upper housing 323.

The lower housing 322 may be fixed to a lower side of the frame 321 and form the lower body of the extracting part 30. The lower housing 322 has an open top and an outlet 322a formed on the bottom. The outlet 322a discharges the beverage extracted from the capsule 1, and may be formed at the center of the bottom of the lower housing 322.

The upper housing 323 may be provided with a cover 34 that opens and closes some of the open portions. The cover 34 is installed to be able to move up and down from the upper housing 323 and selectively opens and closes the open portion of the upper housing 323 as needed.

The cover 34 may be provided with a viewing window 344. As a result, the user may accurately perceive the situation within the upper housing 323 through the viewing window 344. For example, it is possible to recognize whether the cap member 35 accurately pressurizes the capsule 1 through the viewing window 344.

The cover 34 may be configured to be lifted and lowered by driving a lifting part 60 under the control of a control part 80. For example, when inserting or extracting the capsule 1, or before the capsule 1 is inserted and extraction of the beverage begins or after extraction is completed, the cover 34 is automatically operated up and down by the lifting part 60.

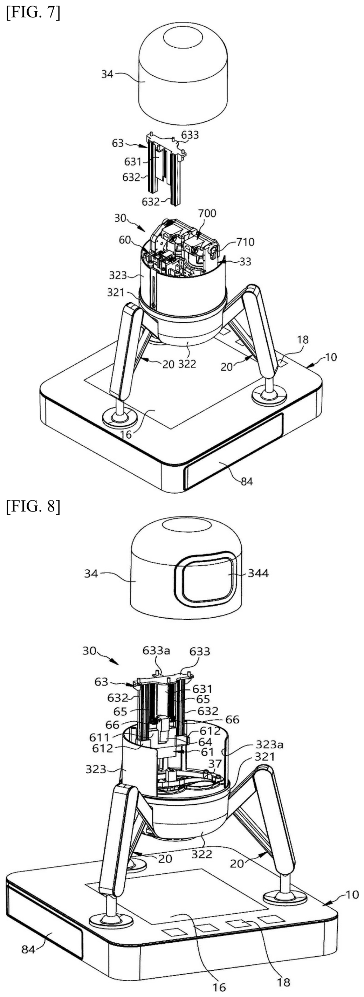

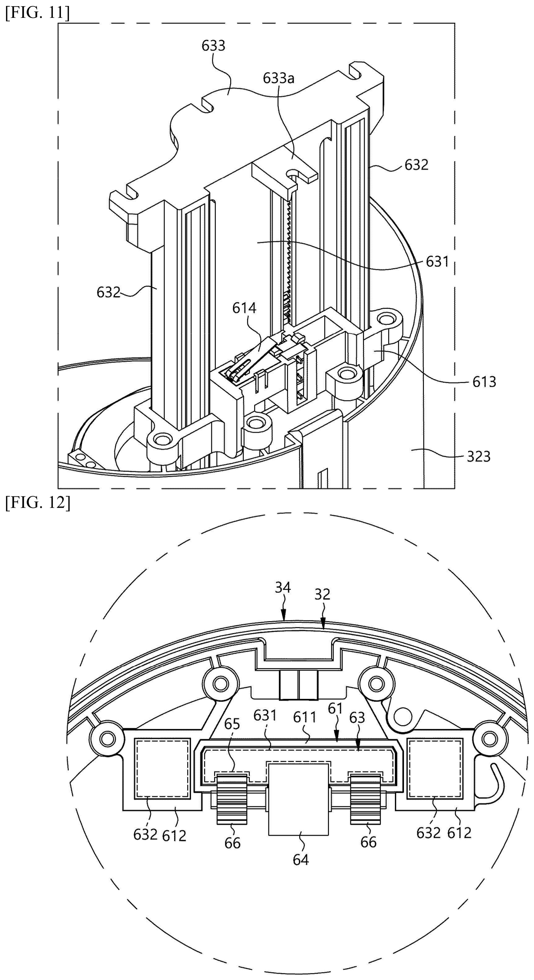

FIGS. 7 to 12 show drawings explaining the structure related to the lifting part 60.

As shown in these drawings, the lifting part 60 may include a lifting guide 61 formed on an inner surface of the upper housing 323. The lifting guide 61 is provided to guide the lifting and lowering movement of the cover 34.

The lifting guide 61 may include a first guide 611 located at the center and a second guide 612 located at at least one side of the first guide 611. It is preferable for the second guide 612 to be positioned on both sides of the first guide 611 for stable lifting and lowering of a guide member 63, which will be described later.

Each of the guides 611 and 612 is formed as an empty space inside and open to the top. That is, the inside of the first guide 611 and the two second guides 612 are formed to penetrate upward and downward.

Each of the guides 611 and 612 may be formed to have different widths (front-to-back width or left-to-right width).

The lifting part 60 may include a guide member 63 that is lifted and lowered under the guidance of the lifting guide 61.

The guide member 63 may be lifted up and down through the guides 611 and 612 of the lifting guide 61 while being supported by the guides 611 and 612. The guide member 63 includes a first support bar 631 that is lifted and moved along the inside of the first guide 611, and a second support bar 632 that is lifted and moved along the inside of the two second guides 612.

The first support bar 631 and the second support bar 632 may be formed to be spaced apart from each other. At this time, the upper ends of the first support bar 631 and the second support bar 632 are formed integrally with a top plate 633 and may be moved up and down together.

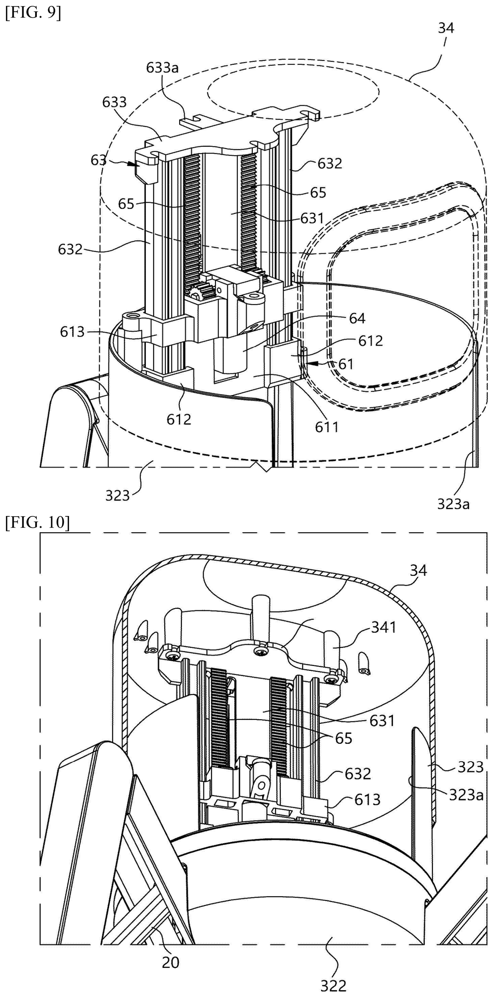

The top plate 633 may be fixed to the inner surface of the cover 34. For example, the top plate 633 may be screwed to a fastening rib 341 (see FIG. 10) formed on the inner surface of the cover 34. Accordingly, when each of the support bars 631 and 632 is moved up and down, the cover 34 may also be moved up and down together.

The lifting part 60 may be configured to lift the cover 34 using a motor. For this purpose, the lifting part 60 may include a first motor 64.

The first motor 64 may be fixed to the first guide 611. More specifically, the first motor 64 may be fixed to the central portion of the first guide 611.

The driving force of the first motor 64 is provided to lift and lower the guide member 63 using a rack gear 65 and a pinion gear 66.

For example, as shown in the drawing of the embodiment, the rack gear 65 may be formed along the vertical direction on the front side of the first support bar 631 (the side where the capsule is inserted). More specifically, rack gears 65 may be formed on both front sides of the first support bar 631, respectively.

The first motor 64 may be provided with the pinion gear 66 that engages and operates with the rack gear 65. More specifically, the first motor 64 is formed as a geared motor. The pinion gears 66 are installed on motor shafts protruding to both sides of the upper end of the first motor 64 and engage the rack gears 65 on both sides of the first support bar 631, respectively.

Meanwhile, the lifting part 60 may further include a third guide 613. The third guide 613 may be positioned above the first guide 611 and may be formed to support the lifting and lowering of each of the support bars 631 and 632.

The third guide 613 may be provided with a switch 614. In addition, an operating protrusion 633a for operating the switch 614 may be formed on an upper plate 633. Accordingly, when the cover 34 moves downward to reach a closed state, the switch 614 may be operated and stopped.

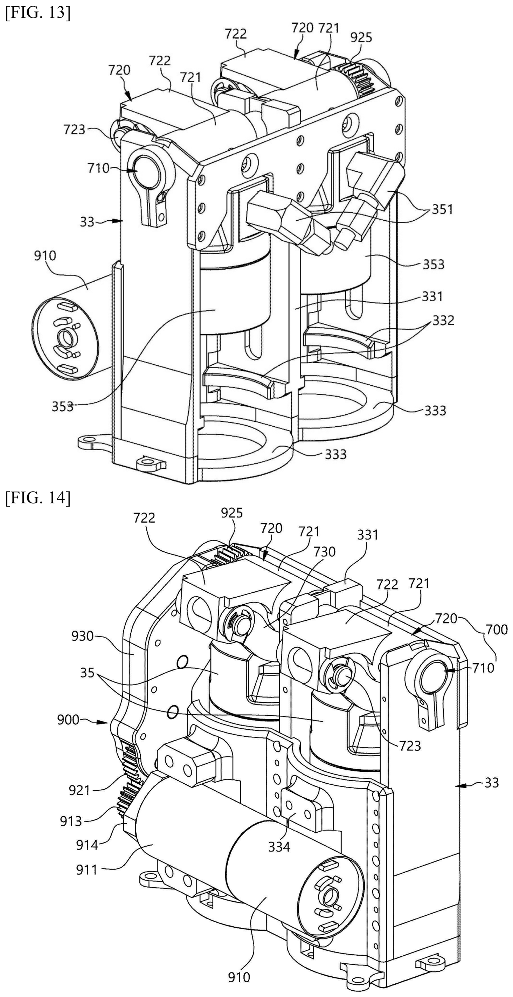

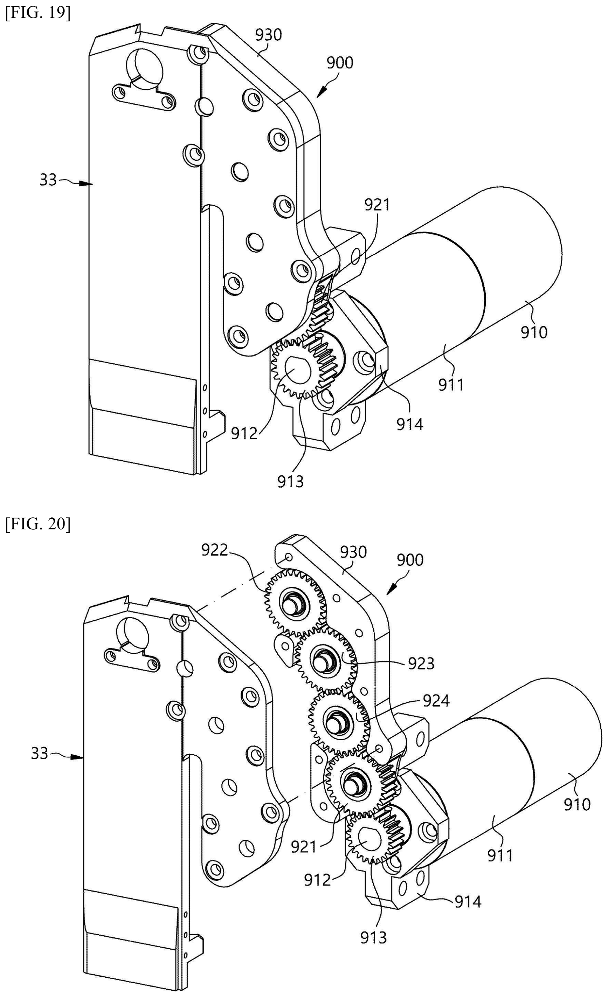

In FIGS. 13 to 20, a configuration of the extracting part 30 constituting the beverage machine of the embodiment of the present disclosure except for the housing 32 is shown for each direction, a coupling state, or each separation state.

As shown in these drawings, the extracting part 30 constituting the beverage machine of the embodiment of the present disclosure may include a frame member 33 on which extracting work is performed.

The frame member 33 may form the inner body of the extracting part 30. As shown in FIG. 3, the frame member 33 is fixed within the housing 32. For example, the frame member 33 may be fixedly installed at its lower end within the lower housing 322.

The frame member 33 may be formed to have an open front and both side walls.

A space (seating space) in which the capsule 1 may be seated may be provided in the lower portion of the frame member 33.

A plurality of seating spaces may be provided in the width direction (forward-backward or left-right direction) of the frame member 33. That is, one capsule 1 may be seated on one side of the frame member 33 , and the other capsule 1 may be seated on the other side of the frame member 33.

Each of the seating spaces may be separated from each other by a partition wall 331. The partition wall 331 is positioned between both side walls of the frame member 33. Preferably, the partition wall 331 is positioned at a central portion between the two side walls.

A space (lifting space) in which the cap member 35, to be described later, may be lifted or lowered, may be provided above each seating space in the frame member 33. The lifting space is formed to have a height such that the cap member 35 is completely away from the capsule 1 placed on a tray 500.

A support protrusion 332 may be formed on a lower inner surface of the frame member 33 to support the circumference of the cap member 35 when the cap member 35 is moved downward. As a result, the cap member 35 may be lifted and lowered in an exactly vertical direction, and the capsule 1 is prevented from moving while the cap member 35 completely covers the capsule 1.

The frame member 33 may be formed to open to the bottom of the seating space where the capsule is seated. For example, the frame member 33 is formed to have an open bottom. Accordingly, the capsule receives the infusion water from the upper side and discharges the extracted beverage to the lower side. That is, the extracted water that passes through the capsule may be directed in the vertical direction of gravity, so that the extraction efficiency may be improved.

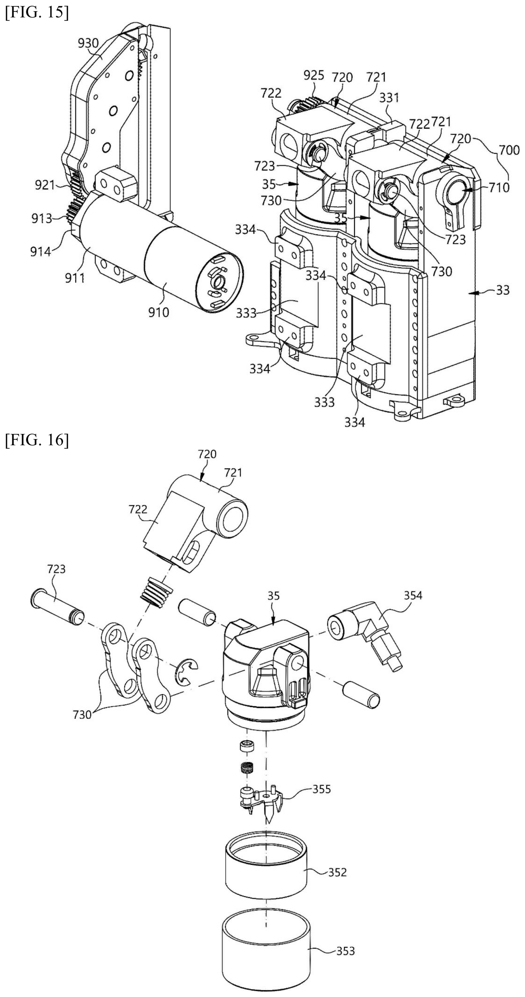

As shown in FIGS. 14 and 15, an upper portion of the rear surface of the frame member 33 may be formed to be open. As a portion of a first link 720 is exposed to the open portion, interference in operation may be prevented.

As shown in FIGS. 14 and 15, a seating groove 333 is formed in a lower portion of the rear surface of the frame member 33. A second motor 910 for lifting and lowering the cap member 35 is seated in the seating groove 333. Coupling protrusions 334 may be formed on the upper and lower portions of the seating groove 333, respectively. A coupling member 914 to which the second motor 910 is coupled may be coupled to the coupling protrusion 334.

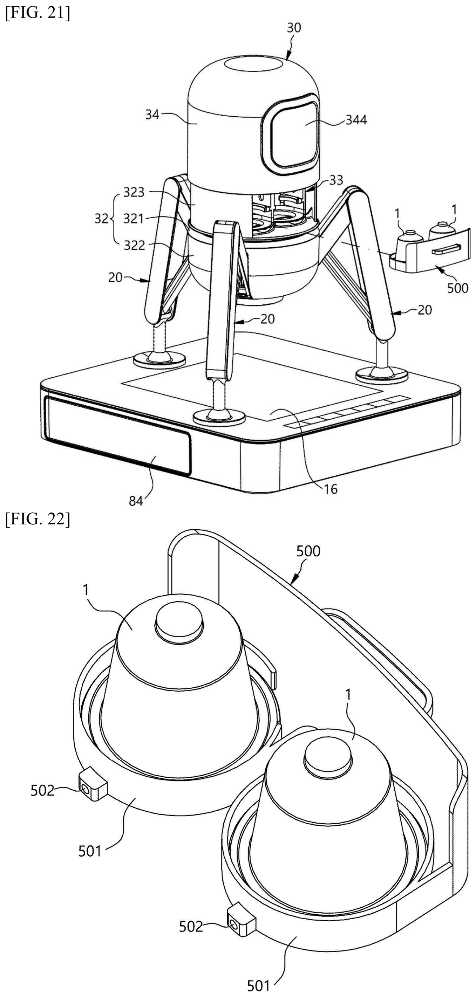

Meanwhile, as shown in FIGS. 3 and 21, the capsule 1 may be provided in the seating space of the frame member 33 using the tray 500. That is, the capsule 1 is provided on the tray 500, and the portion of the tray 500 on which the capsule 1 is placed passes through the open front of the frame member 33 and is detachably mounted in the seating space.

The tray 500 may be inserted into the open portion of the upper housing 323. The open portion is exposed when the cover 34 of the housing 32 is moved upward.

The tray 500 may be placed on a mounting ledge 335 (see FIG. 13) formed at the bottom of the frame member 33. The inside of the mounting ledge 335 is opened so that the beverage extracted from the capsule 1 may fall.

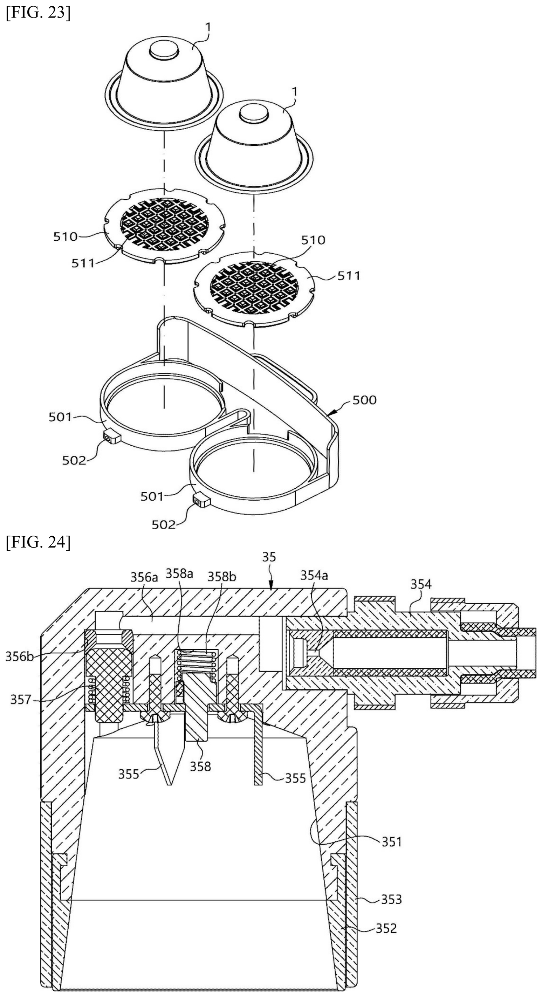

As shown in FIGS. 22 and 23, a plurality of seating portions 501 are formed on the tray 500. Each of the seating portions 501 is formed to be open at the top and bottom, and a stand 510 having a piercing protrusion 511 is provided within each of the seating portions 501. Each capsule 1 is seated on the stand 510, and the piercing protrusion 511 functions to pierce a film 1a sealing the capsule 1 when the capsule 1 is pressed. For this purpose, the capsule 1 is placed on the stand 510 of the tray 500 so that the area sealed with the film 1a faces downward.

The stand 510 may be separated from the seating portion 501. This makes it possible to separate and clean the stand 510. A plurality of extraction holes 512 may be formed in the stand 510 to allow the extracted beverage to flow down.

The extracting part 30 may be provided with a sensor (not shown) to detect whether the tray 500 is accommodated. The sensor may consist of a Hall sensor, and in order for the sensor to detect the tray 500, the tray 500 may be provided with a member (e.g., permanent magnet) 502 that may be detected by the Hall sensor.

The extracting part 30 constituting the beverage machine of the embodiment of the present disclosure may include a cap member 35.

The cap member35 may secure the capsule 1 provided in the frame member 33 while pressing downward from the top.

The cap member 35 is installed to be able to be lifted and lowered in the lifting space within the frame member 33. For example, the cap member35 is positioned on the upper side of the capsule 1, and is configured to receive power from the second motor 910 and move downward to surround and press the capsule 1.

As shown in FIG. 24, a receiving groove 351 in which the capsule 1 is received is formed in the cap member35. When the cap member 35 is moved downward by the receiving groove 351, the outer surface of the capsule 1 is pressed while coming into close contact with the circumferential surface of the receiving groove 351. This may prevent the capsule 1 from moving when extracting a beverage.

The receiving groove 351 may be formed to be recessed upward from the bottom surface of the cap member 35. The circumferential surface within the receiving groove 351 may be formed to have the same shape and slope as the outer surface of the capsule 1. As a result, when the cap member 35 moves downward and the capsule 1 is received in the receiving groove 351, the outer surface of the capsule 1 gradually comes into contact with the inner surface of the receiving groove 351 so that the capsule 1 may be pressed.

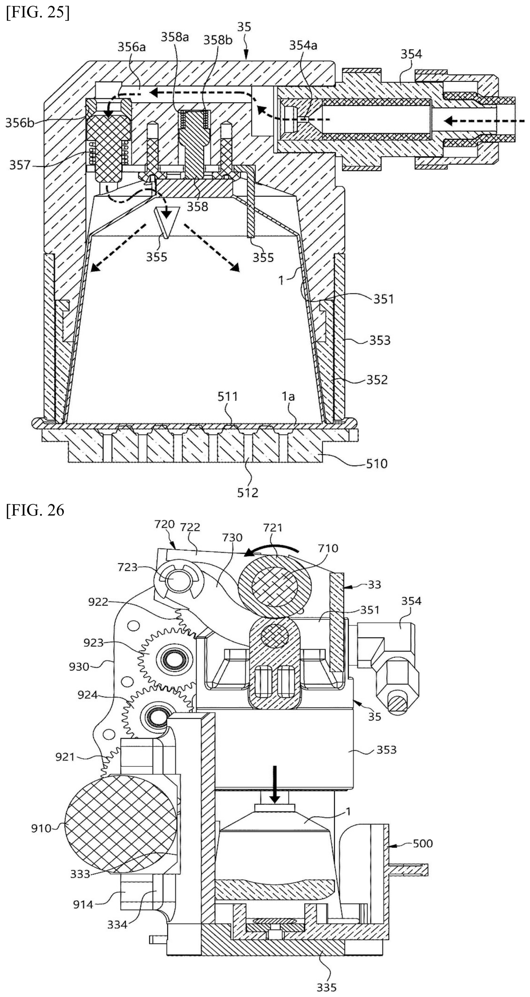

As shown in FIG. 25, the upper surface of the receiving groove 351 may be formed to be higher than the upper surface of the capsule 1. That is, the recessed depth of the receiving groove 351 may be formed to be higher than the height of the capsule 1. Accordingly, a space (flow space) through which the infusion water may flow may be formed between the receiving groove 351 and the upper surface of the capsule 1. That is, the infusion water supplied into the capsule 1 is supplied while flowing between the receiving groove 351 and the upper surface of the capsule 1.

The cap member35 may be configured to make a hole (a hole through which the infusion water is injected) while securing the capsule 1. For this purpose, at least one perforating protrusion 355 is provided in the receiving groove 351 of the cap member 35. The perforating protrusion 355 may be provided in plurality, and each of the perforating protrusions 355 is formed integrally with a single member and is coupled to the upper surface of the receiving groove 351. The perforating protrusion 355 may be positioned biased toward a certain circumference from the center of the upper surface of the receiving groove 351. For example, the plurality of perforating protrusions 355 may be positioned in a radial direction from the center of the upper surface in the receiving groove 351 to make holes in the peripheral portion of the upper surface of the capsule 1. As a result, a through-hole is not formed in only one place in the capsule 1, but in a plurality of places, so that the infusion water injected may be evenly supplied to all parts of the capsule 1. That is, the beverage in the capsule 1 may be extracted uniformly.

Additionally, the perforating protrusion 355 may be formed to protrude downward from the upper surface of the receiving groove 351. That is, the perforating protrusion 355 protrudes in the lifting direction of the cap member 35 and forms a hole in the upper surface of the capsule 1 by the downward movement of the cap member 35. Although not shown, the perforating protrusion 355 may be formed to be inclined.

In this way, since the perforating protrusion 355 is installed to make a hole in the upper surface of the capsule 1, the inflow of infusion water into the capsule 1 and the outflow of extraction water from the capsule 1 coincide with the direction of gravity. That is, since the direction in which the capsule 1 is seated and the direction in which the beverage is extracted are aligned with the direction of gravity, extraction resistance is minimized, thereby improving extraction efficiency.

A flow path through which the infusion water flows may be formed in the cap member 35. The flow path may include a first flow path 356a through which the inflow water flows and a second flow path 356b through which the infusion water is supplied into the receiving groove 351.

The first flow path 356a may be formed on the upper side of the receiving groove 351. That is, the first flow path 356a may be formed so that the infusion water flows in the horizontal direction within the cap member 35 from the upper side of the receiving groove 351. In this case, one end of the first flow path 356a is formed to penetrate a certain circumference of the cap member 35 and be exposed to the outside. The other end of the first flow path 356a is formed to reach the other circumference of the cap member 35, and is formed not to penetrate the circumference of that side.

A nozzle 354 is installed at one end of the first flow path 356a. A hose 881 drawn out from a flow control valve 88 in the base 10 is connected to the nozzle 354. There may be two hoses 881 drawn out from the flow control valve 88. Of the two hoses 881, one hose 881 is connected to the nozzle 354 of the cap member 35 located in one of the lifting spaces of the frame member 33, and the other hose 881 is connected to the nozzle 354 of the cap member 35 located in the other lifting space of the frame member 33.

An orifice 354a may be formed in the nozzle 354. That is, by forming the orifice 354a in the nozzle 354 that momentarily narrows the flow path, the pressure of the infusion water or the inflow speed of the infusion water may be adjusted.

Accordingly, the infusion water stored in the water container 84 in the base 10 may flow into the first flow path 356a through the nozzle 354. That is, the first flow path 356a is formed as a flow path through which the infusion water flows.

The second flow path 356b is formed in a vertical direction from the other end of the first flow path 356a. The second flow path 356b may be formed to penetrate downward from the other end of the first flow path 356a and communicate with the upper circumferential space within the receiving groove 351. The second flow path 356b may be formed in a portion of the upper circumference of the receiving groove 351 that does not overlap with the perforating protrusion 355. For example, the second flow path 356b may be formed to communicate further outward than the perforating protrusion 355 on the upper circumference of the receiving groove 351. That is, the second flow path 356b is formed as a flow path through which the infusion water flows out into the receiving groove 351.

A check valve 357 may be provided within the second flow path 356b. This may prevent backflow of the infusion water provided into the receiving groove 351 and provide sufficient pressure for extracting the beverage within the capsule 1.

Meanwhile, a cap housing 352 extending downward may be further formed around the lower end of the cap member 35. The cap housing 352 may be made of a rubber material. That is, the additional provision of the cap housing 352 makes it possible to prevent pressure leakage or the infusion water leakage through a gap that may occur between the inner surface of the receiving groove 351 and the outer surface of the capsule 1.

Additionally, a metal cover 353 may be further provided on the outer surface of the cap housing 352. The metal cover 353 serves to prevent the cap housing 352 from opening unintentionally due to the pressure of the infusion water because the cap housing 352 is made of a rubber material.

The extracting part 30, which constitutes the beverage machine of the embodiment of the present disclosure, may include a lifting module 700 for lifting and lowering the cap member 35.

The lifting module 700 may be configured to lift and lower the cap member 35 with driving force provided from the second motor 910.

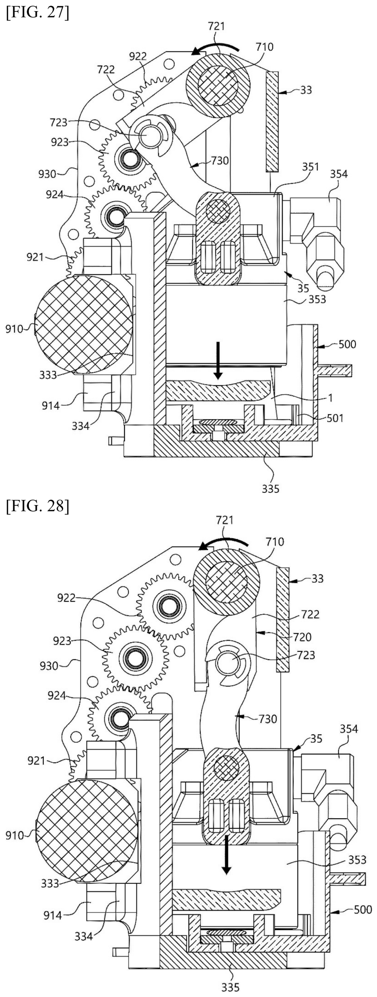

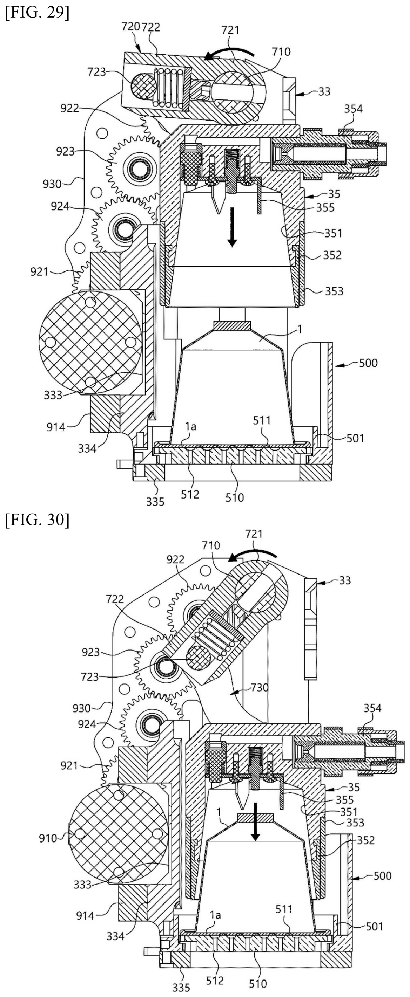

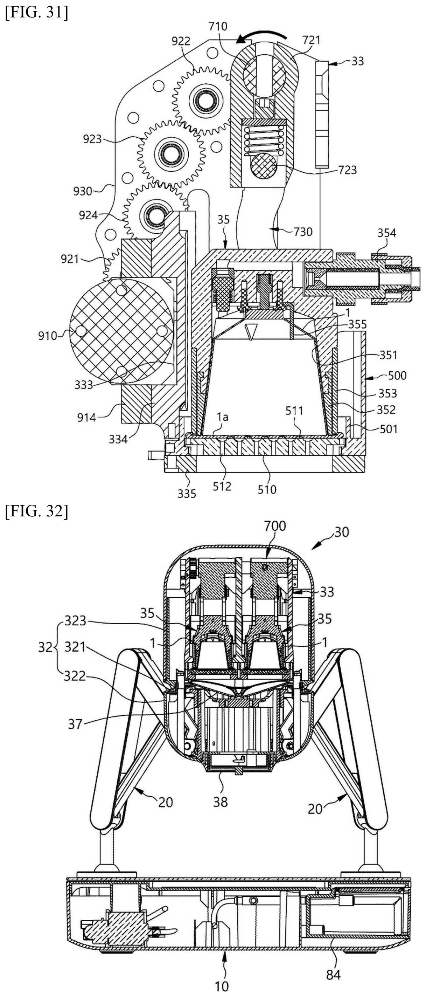

FIGS. 13 to 18 and 26 to 31 show the lifting module 700 in detail.

As shown in these drawings, the lifting module 700 includes a first rotation shaft 710. Both ends of the first rotation shaft 710 are rotatably installed on both sidewalls of the frame member 33, respectively. The first rotation shaft 710 may be formed to penetrate the partition wall 331 of the frame member 33.

The lifting module 700 includes a first link 720. When the cap member 35 is provided in plural numbers, the first link 720 may also be provided in plural numbers. For example, when two cap members 35 are provided as in the embodiment, the first link 720 may also be provided in two pieces.

The first link 720 may include a hub 721 through which the first rotation shaft 710 passes, and a protrusion part 722 protruding from one circumference of the hub 721. The protrusion part 722 is positioned to face the horizontal direction when the cap member 35 moves upward, and is positioned to be perpendicular to the vertical direction of the cap member 35 when the cap member 35 moves downward. A second rotation shaft 723 is provided at the end of the protrusion part 722.

The lifting module 700 includes a second link 730.

The second link 730 serves to lift and lower the cap member 35 while linking with the operation of the first link 720 while both ends thereof are connected to the first link 720 and the cap member 35. One end of the second link 730 is rotatably connected to the second rotation shaft 723 provided on the first link 720, and the other end of the second link 730 is provided on the upper end of the cap member 35. The second links 730 may be provided as a pair. In this case, one end of the two second links 730 is connected to both ends of the second rotation shaft 723, respectively, and the other end of the two second links 730 is connected to both ends of the upper end of the cap member 35, respectively.

When the first link 720 is erected to face the cap member 35, the second link 730 is erected to face the cap member 35 and is positioned to press the cap member 35 downward. As a result, the capsule 1 may be smoothly pierced because the maximum pressing force may be provided with the cap member35.

The second link 730 may be formed in a curved shape so that the cap member 35 may be lifted and lowered while accurately linking with the first link 720 when the first link 720 is rotated. For example, as shown in the drawings of the embodiment, the second link 730 may not be formed in a straight line, but may be formed in a curved shape with a partially bent shape.

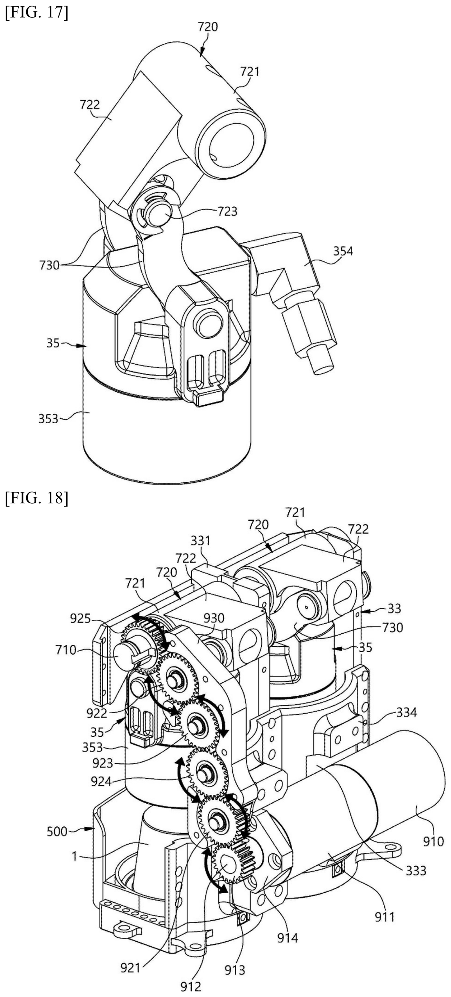

FIGS. 18 to 20 show a power transmission structure for rotation of the first rotation shaft 710.

As shown in these drawings, the extracting part 30 forming the beverage machine of the embodiment of the present disclosure includes a plurality of gears (913, 921, 922, 923, 924, 925) for transmitting the driving force of a second motor 910 to the first rotation shaft 710 of the lifting module 700. That is, it is configured to rotate the first rotation shaft 710 while power is transmitted to a plurality of gears 913, 921, 922, 923, 924, and 925. Accordingly, even if the pressure inside the receiving groove 351 becomes very large when the capsule 1 is pressurized by the cap member 35 or the beverage is extracted, the first rotation shaft 710 may be prevented from being shaken by the engagement between the gears 913, 921, 922, 923, 924, and 925.

The gears 913, 921, 922, 923, 924, and 925 may include a driving gear 913 installed on a motor shaft 912 of the second motor 910, and driven gears 921, 922, 923, and 924 that receive the driving force of the driving gear 913 to rotate the first rotation shaft 710. The driven gears 921, 922, 923, and 924 may be provided in plural. Preferably, three or more driven gears may be provided.

Among the plurality of driven gears 921, 922, 923, 924, one driven gear (first driven gear) 921 engages with the driving gear 913 to receive power. Among the plurality of driven gears 921, 922, 923, 924, another driven gear (second driven gear) 922 engages with a linking gear 925 provided on the first rotation shaft 710 to transmit power. Another at least one driven gear 923,924 is disposed between the first driven gear 921 and the second driven gear 922, and serves to prevent movement while maintaining the engagement state with the first driven gear 921 or the second driven gear 922. This is shown in FIG. 9 attached thereto.

At least some of the gears 913, 921, 922, 923, 924, and 925 may be disposed in a gear housing 930. For example, the driven gears 921, 922, 923, and 924 may be disposed in the gear housing 930 to form a single module. Accordingly, if any one of the driven gears 921, 922, 923 and 924 located in the gear housing 930 is damaged, only the damaged gear needs to be replaced, thus reducing the work time compared to a complete replacement.

Meanwhile, the second motor 910 may include a reduction gear 911 that is separate from each gear.

The extracting part 30, which constitutes the beverage machine of the embodiment of the present disclosure, may include a beverage reservoir 37.

As shown in the attached FIGS. 6 and 32 to 34, the beverage reservoir 37 is located at the bottom of the frame member 33 in the housing 32 and receives the beverage extracted from the capsule 1. A guide pipe 371 is formed in the beverage reservoir 37 to guide the discharge of the beverage. That is, the beverage that flows down into the beverage reservoir 37 falls into the beverage cup 2 placed on the base 10 through the guide pipe 371.

In the following, the operation of the beverage machine according to the embodiment of the present disclosure described above will be described.

First, the beverage extraction is prepared. That is, the beverage cup 20 is placed at the lower portion of the extracting part 30 on the upper surface of the base 10, and the capsule 1 to be extracted is provided to the extracting part 30 of the beverage machine of the present disclosure.

In order to provide the capsule 1 to the extracting part 30, the cover 34 is moved upward to open the seating space of the frame member 33.

The cover 34 may be moved upward by driving the first motor 64 forming the lifting part 60. That is, when the first motor 64 is driven and the two pinion gears 66 are operated, the first support bar 631 having the rack gear 65 engaged with the pinion gear 66 moves upward. As the first support bar 631 moves upward, the top plate 633 moves upward together, causing the cover 34 to move upward. In the process of moving the cover 34 upward, the second support bar 632 is supported by the second guide 612 and moves up and down. As a result, the first support bar 631, the top plate 633, and the cover 34 are accurately moved upward, thereby opening the seating space of the frame member 33.

Then, when the seating space is opened, the tray 500 provided in the seating space is taken out and the capsule 1 to be extracted is provided to the tray 500. The capsule 1 is placed such that the surface sealed by the film 1a faces the bottom, and then placed on the upper surface of the stand 510 of the tray 500. Thereafter, the tray 500 on which the capsule 1 is seated is stored in the seating space of the frame member 33.

When the tray 500 is completely stored in the seating space, a sensor (not shown) detects this, and then the first motor 64 is driven under the control of the control part 80. At this time, the first motor 64 is driven in a direction opposite to the direction in which the cover 34 is moved upward, and thus the cover 34 is moved downward. When the cover 34 moves downward, the second support bar 632 moves under the guidance of the second guide 612.

When the cover 34 is completely moved downward, the operating protrusion 633a formed on the top plate 633 operates the switch 614 provided on the third guide 613, thereby causing the first motor 64 to stop. This may prevent excessive downward movement of the cover 34.

When the cover 34 is closed, preparation for extracting the beverage is completed.

When the preparation (or control) for beverage extraction occurs in the state where the preparation is completed, the second motor 910 is driven.

When the second motor 910 is driven, its motor shaft 912 and the driving gear (main gear) 913 provided on the motor shaft 912 are rotated. The driving force generated by driving the second motor 910 provides a set speed or a set torque by the reduction gear 911.

And, as the motor shaft 912 and the driving gear 913 rotate, the driven gear 921 engaged with the main gear 913 and the other driven gears 922, 923, 924 engaged with the driven gear 921 are sequentially rotated. Accordingly, the linking gear 925 engaged with the last driven gear 924 operates and the first rotation shaft 710 rotates.

When the first rotation shaft 710 is rotated, the two first links 720 are rotated. Accordingly, the protrusion part 722 of each first link 720 is rotated in a gradually erect direction. For example, when the motor 910 is driving as shown in the attached FIGS. 26 to 31, the first link 720 rotates counterclockwise and gradually faces a vertical direction. FIGS. 26 to 28 and FIGS. 29 to 31 are operation state diagrams showing the same state in cross sections from different parts.

When the first link 720 is rotated, the second link 730 is also rotated. The second link 730 is operated to gradually move the cap member 35 downward as the rotation of the first link 720 progresses.

Accordingly, the cap member 35 is gradually moved downward within the frame member 33. While the cap member35 is moving downward, the capsule 1 is gradually received from the upper portion into the receiving groove 351 formed in the cap member35.

While the capsule 1 is being received in the receiving groove 351 of the cap member 35, the inner surface of the receiving groove 351 or the inner surface of the cap housing 352 is in close contact with the outer surface of the capsule 1. The capsule 1 is gradually pressed downward.

When the cap member 35 presses the capsule 1, the perforating protrusion 355 provided on the upper surface of the receiving groove 351 perforates the upper circumference of the capsule 1, thereby forming a plurality of through-holes (holes through which the infusion water is injected) on the upper surface of the capsule 1.

In this way, when the capsule 1 is completely received in the receiving groove 351 of the cap member 35, the outer surface of the capsule 1 and the inner surface of the receiving groove 351 are in an airtight state by the cap housing 352. In this case, a space through which the infusion water may flow is formed between the upper surface in the receiving groove 351 and the upper surface of the capsule 1.

When the perforating for forming through-holes in the capsule 1 is completed, the pump 86 and the heating part 87 are operated under the control of the control unit 80. Accordingly, the infusion water stored in the water container 84 flows along the flow pipe and passes through the heating part 87, and is heated to a set temperature in the process. Subsequently, the heated infusion water is provided to one hose 881 under the control of the flow control valve 88 and then to one cap member 35 through the nozzle 354 connected to the hose 881.

The infusion water provided through the cap member 35 flows into the first flow path 356a through the nozzle 354. Then, after flowing through the first flow path 356a, the infusion water flows into the space between the upper side of the capsule 1 and the receiving groove 351 through the second flow path 356b. Thereafter, the infusion water is supplied into the capsule 1 by passing through the through-holes in the capsule 1 by the pressure of the infusion water continuously supplied to the space.

Meanwhile, the infusion water introduced into the space between the upper side of the capsule 1 and the receiving groove 351 may flow back to the second flow path 356b by pressure in the space. However, since the check valve 357 is provided in the second flow path 356b, backflow of the infusion water may be prevented.

The infusion water provided into the capsule 1 is discharged from the bottom of the capsule 1 while tearing the film 1a, which is the bottom of the capsule 1.

The extracted water (extracted beverage) discharged from the capsule 1 passes through each extraction hole 511 formed in the stand 510 of the tray 500 and reaches the beverage reservoir 37 at the bottom thereof. The beverage that flows down into the beverage reservoir 37 is discharged into the beverage cup 20 placed on the base 1 through the guide pipe 371.

The beverage extracted from the capsule 1 is provided to the beverage cup 20 through the above-described process.

When a certain volume of the extracted beverage is provided in the beverage cup 20, the infusion water may be supplied to the other cap member 35 by the flow control valve 88. In this case, the beverage is extracted from the capsule (second capsule) in the other cap member in the same process as the process of extracting the beverage from the capsule (first capsule) in the other cap member.

In addition, the beverage extracted from the two capsules 1 may be blended and provided in the beverage cup 20.

When a beverage is blended and provided, the temperature, extraction volume, or extraction pressure of the extraction water may be different when extracting the beverage for the two different capsules (1). In other words, the two beverages may be blended while changing the temperature, pressure, or extraction amount under extraction conditions suitable for the beverage of each capsule 1.

Additionally, when the beverage is blended and provided, the beverage from at least one capsule 1 may be extracted more than once. For example, the beverage of the first capsule 1 may be extracted more than once. That is, a set amount of the beverage of the first capsule 1 and the beverage of the second capsule 1 are sequentially extracted, and then a set amount of the beverage of the first capsule 1 is additionally extracted to provide a multi-layered beverage. This method may be advantageous for enjoying a plurality of different flavored beverages sequentially when applied to extractions in which the two beverages do not blend well with each other.

When the extraction of the beverage is completed, the second motor 910 is driven and the cap member 35 is moved upward to return to the initial position.

After the cap member 35 is returned to its initial position, the cover 34 is moved upward by the user's selection or under the control of the control part 80 and the seating space of the frame member 33 may be opened.

When the seating space is opened, the user takes out the tray 500 from the seating space and then removes the capsule 1. In this case, since the stand 510 on which the capsule 1 is placed is disposed to be detachable from the tray 500, the stand 510 may be separated and cleaned according to the user's needs.

Thereafter, the tray 500 is accommodated in the seating space of the frame member 33 and the cover 34 is closed, and then the operation of the beverage machine is completed.

As such, in the beverage machine of the present disclosure, the seating direction of the capsule 1 and the direction in which the beverage is extracted coincide with the direction of gravity, thereby improving the extraction efficiency.

In addition, the beverage machine of the present disclosure accommodates the capsule 1 while forming the receiving groove 351 of the same shape as the capsule 1 in the cap member 35, thereby preventing the capsule 1 from moving during the extraction of the beverage.

In addition, in the beverage machine of the present disclosure, since the cap member 35 is provided with the perforating protrusion 355, the cap member35 may pressurize and perforate the capsule 1 simultaneously.

In addition, in the beverage machine of the present disclosure, the space where the capsule beverage is extracted may be prevented from the external environment by the housing 32 that forms the exterior.

In addition, in the beverage machine of the present disclosure, since the hose 881 is connected to the upper circumference of the cap member 35 so that the infusion water is introduced, the cap member 35 may be moved up and down while the infusion water is provided into the cap member 35.

In addition, in the beverage machine of the present disclosure, since the flow path formed inside the cap member 35 is located on the upper side of the receiving groove 351, the infusion water may be provided from the upper side of the receiving groove 351 toward the inside of the receiving groove 351.

In addition, in the beverage machine of the present disclosure, since a space through which the infusion water may flow is formed between the upper surface of the receiving groove 351 formed in the cap member 35 and the upper surface of the capsule 1, even if the through- hole of the capsule 1 is not formed in the exact center, the infusion water may be smoothly supplied into the capsule 1.

In addition, in the beverage machine of the present disclosure, since the flow path formed in the cap member 35 includes the first flow path 356a formed horizontally and the second flow path 356b formed vertically, the infusion water, after flowing in the horizontal direction with the nozzle 354, may be provided to the inside of the receiving groove 351.

In addition, in the beverage machine of the present disclosure, since the check valve 357 is provided in the flow path formed in the cap member 35, backflow of infusion water in the receiving groove 351 may be prevented.

In addition, in the beverage machine of the present disclosure, since the capsule 1 is provided by the tray 500, so the capsule 1 may be provided in a state where it is seated in an accurate position.

In addition, in the beverage machine of the present disclosure, when the tray 500 is inserted into the housing 32, the cover 34 is closed, so the tray 500 may be prevented from moving out of its original position unintentionally.

Meanwhile, the beverage machine of the present disclosure may be changed into various structures or may be additionally provided with various components.

As an example, when extraction of the capsule 1 is completed, pressure remains in the space between the upper surface of the receiving groove 351 and the upper surface of the capsule 1. Accordingly, when the extraction operation is completed and the cap member 35 is moved upward, the capsule 1 may be brought together by the residual pressure in the receiving groove 351.

In consideration of this, the cap member 35 may be provided with a separating pin 358 for separating the capsule 1. That is, by providing the separating pin 358 on the cap member 35, the capsule 1 may be prevented from being brought together with the cap member 35.

As shown in the attached FIGS. 24 and 25, the separating pin 358 may be disposed in the central portion of the upper surface of the receiving groove 351. In this case, since the perforating protrusion 355 is located in the upper circumference of the receiving groove 351, it is possible to install the separating pin 358 at the center of the upper surface of the receiving groove 351. In particular, since the separating pin 358 is located in the center of the upper surface of the receiving groove 351, the separation force may be provided to the center of the upper surface of the capsule 1, so that the capsule 1 may be separated more smoothly.

Additionally, the separating pin 358 may be configured to push and separate the upper surface of the capsule 1 when the cap member 35 moves upward. For this purpose, the separating pin 358 may be installed to operate elastically. That is, by providing an elastic member 358b in an installation groove 358a where the separating pin 358 is installed, when the pressure of the separating pin 358 is released, the separating pin 358b is pushed out by the elastic restoring force of the elastic member 358b. As a result, the capsule 1 may be more smoothly separated from the cap member 35.

As another example, in the case of the beverage machine of the present disclosure, after beverage extraction is completed, there is a risk that the beverage remaining in the capsule 1 may flow down and contaminate the upper surface of the base 10. That is, in the beverage machine of the present disclosure, the capsule 1 is mounted in a vertical position and the beverage is extracted while providing infusion water from the top to the bottom, which may cause a problem of the beverage flowing into the base 10 after extraction.

Conventionally, it is common to provide an additional tray to receive residual water in the area where the beverage cup 20 is placed, or to form a groove where residual water may collect.

However, since the beverage machine of the present disclosure has a structure in which a display window 16 is provided on the upper surface of the base 10, it is difficult to provide a structure for receiving or storing residual water in that area.

Accordingly, in another example of the present disclosure, it is suggested that a residual reservoir 38 is provided at the bottom of the guide pipe 371 of the beverage reservoir 37 provided in the housing 32. That is, by the additional provision of the residual reservoir 38, the beverage in the beverage reservoir 37 may be prevented from directly dropping on the base 10.

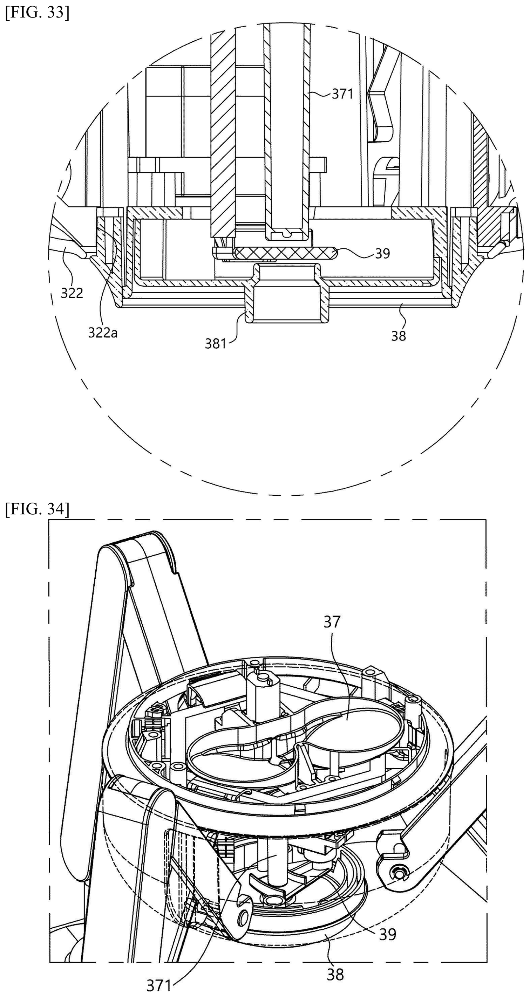

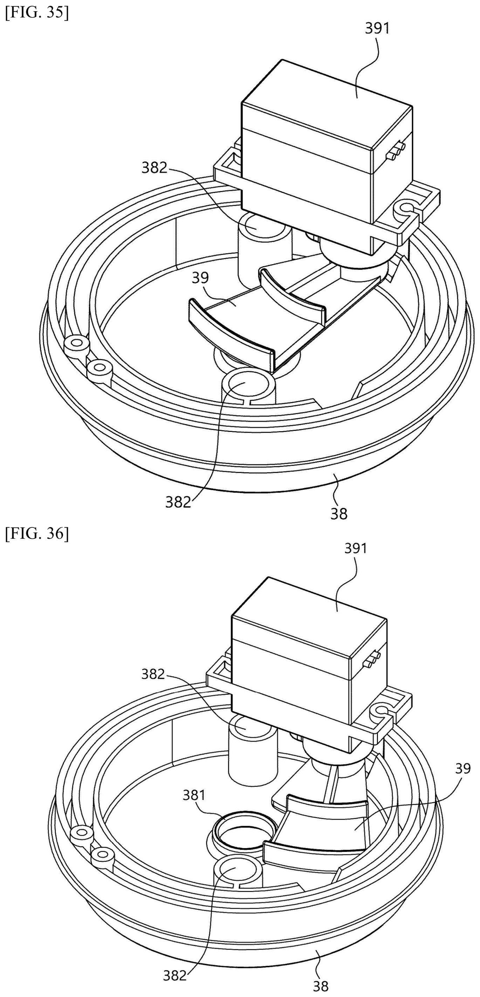

As shown in FIGS. 33 to 36, the residual reservoir 38 may be formed to store a certain amount of beverage. That is, the residual reservoir 38 may be formed to have a bottom surface and a circumferential surface to store the residual beverage. In addition, an outlet port 381 may be formed on the bottom of the residual reservoir 38 to allow the beverage dropping from the guide tube 371 of the beverage reservoir 37 to pass through. The outlet port 381 is positioned to coincide vertically with the guide pipe 371. As a result, the beverage dropped from the guide pipe 371 may pass directly through the outlet port 381.

The outlet port 381 may be formed to protrude upward from the bottom of the residual reservoir 38. As a result, the remaining beverage may be stored at a certain level in the residual reservoir 38. That is, the remaining beverage stored in the residual reservoir 38 may be prevented from flowing down into the outlet port. The lower end of the outlet port 381 may be formed to protrude from the bottom of the water reservoir 38.

Additionally, the outlet port 381 may be configured to be selectively opened and closed. For example, a guide plate 39 may be disposed between the outlet port 381 and the guide pipe 371. The guide plate 39 is disposed between the outlet port 381 and the guide pipe 371 while rotating by driving the third motor 391, or is configured to deviate from the position. The third motor 391 may be fixed within the housing 32. Although not shown, the guide plate 39 may be configured to be operated by various driving sources other than a motor.

The guide plate 39 is formed to have a bottom and two circumferential walls, so that the remaining beverage falling on the guide plate 39 flows to one side under the guidance of the guide plate 39 and then falls to a position that does not coincide with the outlet port 381 and is stored in the residual reservoir.

It is preferable that the residual reservoir 38 is configured to be easily attached and detached from the lower housing 322. In other words, if the residual reservoir 38 is configured to be easily detachable, the remaining beverage stored therein may be discharged and washed at any time. For this purpose, the residual reservoir 38 may be configured to be attached to the bottom of the lower housing 322 using a magnet 382.

Although not shown, the residual reservoir 38 may be formed to be rotatably attached to and detached from the bottom of the lower housing 322.

The beverage machine of the present disclosure may solve various inconveniences that occur after extracting a beverage by providing various additional structures.

In the above, even though all the components constituting the embodiment according to the present disclosure have been described as being combined or operated in combination, the present disclosure is not necessarily limited to this embodiment. That is, as long as it is within the scope of the purpose of the present disclosure, all of the components may be operated by selectively combining one or more of them. In addition, terms such as "include," "comprise," or "have" described above mean that the corresponding component may be present, unless specifically stated to the contrary, and therefore do not exclude other components. Rather, it should be interpreted as being able to include other components. All terms, including technical or scientific terms, unless otherwise defined, have the same meaning as generally understood by a person of ordinary skill in the technical field to which the present disclosure pertains. Commonly used terms, such as terms defined in a dictionary, should be interpreted as consistent with the contextual meaning of the related technology, and should not be interpreted in an idealized or overly formal sense unless explicitly defined in the present disclosure.

## Claims

1. A beverage machine using capsules comprising:
a base having a water container; and
an extracting part provided on the upper side of the base and extracting a beverage in a capsule with infusion water supplied from the water container while providing a space for the capsule to be seated therein,
wherein the extracting part includes:
a housing forming the exterior of the extracting part;
a frame member fixed within the housing, the frame member positioning the capsule therein and discharging the extracted beverage downward; and
a cap member that is installed to move up and down on the upper side of the capsule within the frame member, pressurizes and perforates the capsule, and supplies the infusion water into the capsule.

2. The beverage machine of claim 1, wherein the cap member includes:
a receiving groove formed in the cap member to receive the capsule;
a nozzle connected to the circumference of the cap member to allow the infusion water to flow in; and
a flow path formed on the upper side of receiving groove, and flow path through which the infusion water flows.

3. The beverage machine of claim 2, wherein the upper surface of the receiving groove in the cap member is formed higher than the upper surface of the capsule so that a space through which the infusion water flows is formed between the receiving groove and the upper surface of the capsule.

4. The beverage machine of claim 2, wherein at least one perforating protrusion is formed on the upper surface of the receiving groove formed in the cap member.

5. The beverage machine of claim 2, wherein the flow path formed in the cap member includes:
a first flow path formed to penetrate horizontally a certain upper circumference of the cap member; and
a second flow path penetrating downward from an end of the first flow path and communicating with an upper circumferential space within the receiving groove.

6. The beverage machine of claim 5, wherein a check valve is provided in the second flow path to prevent backflow of the infusion water.

7. The beverage machine of claim 2, wherein a separating pin is provided at the center of the upper surface of the receiving groove formed in the cap member to push and separate the upper surface of the capsule when the cap member moves upward, and the separating pin is installed to operate elastically.

8. The beverage machine of claim 1, wherein the housing of the extracting part includes:
a frame formed in a ring shape;
a lower housing fixed to a lower side of the frame, lower housing forming a lower body of the extracting part and having an outlet at the bottom thereof; and
an upper housing fixed to an upper side of the frame and forming an upper body of the extracting part.

9. The beverage machine of claim 8, wherein the upper housing is a space in which the capsule is seated so that a portion of the circumferential surface of the upper housing is formed to be open.

10. The beverage machine of claim 9, wherein a cover that opens and closes an open portion of the circumferential surface of the upper housing is provided in the upper housing so as to be lifted and lowered by a lifting part.

11. The beverage machine of claim 10, wherein the lifting part includes:
a lifting guide provided in the upper housing;
a guide member that penetrates the lifting guide up and down while being supported by the lifting guide and the upper end thereof is fixed to the inner surface of the cover; and
a motor to lift and lower the guide member.

12. The beverage machine of claim 11, wherein the guide member is provided with a rack gear formed along the top and bottom thereof, and a pinion gear engaged with the rack gear is provided in the motor.

13. The beverage machine of claim 11, wherein the lifting guide is provided with a switch, and the guide member is provided with an operating protrusion that operates the switch when the cover moves downward to reach a closed state.

14. The beverage machine of claim 1, further comprising a tray on which the capsule is seated, and the tray detachably mounted within the frame member.

15. The beverage machine of claim 12, wherein the tray includes:
at least one seating portion formed to be open at the top and bottom; and
a stand detachably installed on the seating portion and having a plurality of through-holes on which the capsule is seated.

16. The beverage machine of claim 1, wherein the housing is formed so that its bottom is open, and
wherein a beverage reservoir provided at the bottom of the frame member in the housing has a guide pipe to receive the beverage extracted from the capsule and drop it into a beverage cup placed on a base.

17. The beverage machine of claim 14, wherein a residual reservoir is provided at the bottom of the guide pipe of the beverage reservoir to prevent residual beverage flowing down from the guide pipe from falling into the beverage cup.

18. The beverage machine of claim 17, wherein the residual reservoir is formed to have a bottom surface and a circumferential surface for storing the residual beverage, and an outlet port positioned to coincide vertically with the guide pipe and open toward the base protrudes from the bottom of the residual reservoir.

19. The beverage machine of claim 18, wherein a guide plate is provided while selectively positioned between the outlet port and the guide pipe and guides the residual beverage flowing from the guide pipe to flow to one side of the outlet port inside the residual reservoir.

20. The beverage machine of claim 17, wherein the residual reservoir is installed detachably on the bottom of the housing.
